# EUROPEAN PATENT APPLICATION

(11) **EP 2 532 878 A1**
(43) Date of publication of application: **12.12.2012**
(21) Application number: 12167243.0
(22) Date of filing: 09.05.2012
(51) Int. Cl.: F02M 69/04, F02M 51/06, F02M 21/02

(54) **A fuel injector for internal combustion engines**

(30) Priority: 06.06.2011 IT RE20110039
(71) Applicant: Rail S.P.A., 42030 Vezzano Sul Crostolo (Reggio Emilia) (IT)
(72) Inventor: Stevani, Luigi, 42030 VEZZANO SUL CROSTOLO (REGGIO EMILIA) (IT); Bianco, Alessandro, 42030 VEZZANO SUL CROSTOLO (REGGIO EMILIA) (IT)
(74) Representative: Corradini, Corrado

(57) **Abstract**

A fuel injector (10) for internal combustion engines, comprising an external casing (11) provided with at least an inlet (13) and at least an outlet (14) for the fuel to be injected, an obturator element (16), means (18) for moving the obturator element (16) between a closed position, in which it closes the communication between the inlet (13) and the outlet (14), and an open position, in which it opens the communication between the inlet (13) and the outlet (14), a fixed endrun element (21) designed to come into contact with the obturator element (16) in order to halt said obturator (16) in the open position and an elastomer ring (30) interposed between the obturator element (16) and the endrun element (21), the elastomer ring (30) exhibiting a transversal generating section (300) comprising at least a portion (301) having an inclined development with respect to a central axis (X) of the elastomer ring (30).

## Description

The present invention relates to a fuel injector, in particular an injector of methane gas or Liquid Petroleum Gas (LPG) for alternative internal combustion engines destined to activate vehicles or motor boats, or fixed installations for the production of electrical or heat energy.

As is known, an alternative internal combustion engine usually comprises an engine block in which a plurality of cylinders is fashioned, each of which accommodates an alternating piston and is closed by a head defining, together with the piston, the combustion chamber. The pistons are mechanically connected to a crank shaft, such that the alternating motion of each piston, caused by the combustion of an air-fuel mixture internally of the respective combustion chamber, is transformed into an active rotation of the crank shaft.

In order to be able to function, an internal combustion engine is further provided with an aspirating system of the comburent air, a fuel injection system and a gas exhaust system for the gases produced by the combustion of the air-fuel mixture internally of the cylinders.

The aspirating system generally comprises an aspirating conduit suitable for conveying an air flow internally of an aspirating manifold from which a plurality of channels leave, each of which is connected to a respective cylinder of the engine via at least an aspirating valve.

Likewise, the exhaust system comprises an exhaust manifold from which a plurality of channels leave, each of which is connected to a respective cylinder of the engine via at least a discharge valve, and an exhaust conduit destined to convey the flow of combustion gases from the exhaust manifold to the outside environment.

The fuel injection system generally comprises at least an injector for each engine cylinder, which is suitable for receiving the fuel from a pump connected to a fuel tank, and is destined to inject it directly internally of a respective cylinder (for example in engines with spontaneous ignition by compression, typically supplied by diesel fuel) or internally of the aspirating system (for example in spark-ignited engines, typically fuelled by petrol).

In the field of motor vehicles, alternative internal combustion engines are quite widespread, which are fuelled wholly or in part by combustible gas, for example methane gas or liquefied petroleum gas (LPG).

In these engines, the injection system of fuel as above-described is flanked or replaced by a supply plant of the combustible gas, which generally comprises a pressurised tank, in which the combustible gas is conserved at a higher pressure than atmospheric pressure, a supply conduit destined to connect the tank with a combustible gas injector, one or more safety check valves and a pressure reducer/stabiliser valve located along the supply conduit, for bringing the combustible gas to and and maintaining it at operating pressure before it reaches the injector.

The combustible gas injector generally comprises an external casing delimiting an internal volume for collection/distribution of the gas, which is in communication with a gas inlet for connecting with the supply conduit, and with a plurality of gas outlets, typically in a number equal to the number of the engine cylinders, each of which is destined to be connected, via a respective connecting conduit, with a respective channel of the aspirating manifold, such as to mix the combustible gas with the comburent air before inlet into the engine cylinder.

A solenoid valve for batching the combustible gas is generally associated to each outlet of the injector, which solenoid valve comprises an obturator element made of ferromagnetic material, generally known as a mobile anchor or small piston, and a stationary solenoid, i.e. a coil made of many windings of electric wire, which envelops a portion of the obturator element and is connectable to a source of electrical energy

In practice, the obturator body and the solenoid define a usual electromagnet, of which an obturator body functions as a mobile metal nucleus: when the solenoid is connected to the electric source, the electric current circulating in the coils of the electric wire generates a magnetic field which displaces the obturator element from a closed position, in which it closes the respective gas outlet, to an open position, in which it opens the respective gas outlet.

The open position is generally defined by a fixed element of the electromagnet, which is normally made of metal and is suitable for contactingly receiving the obturator element in the form of an endrun stop. For each opening of the gas outlet, which can occur even many times a second in accordance with the rotation regime of the engine, a percussion occurs between the obturator element and the endrun element which, both being made of a metal material, give rise to significant levels of vibration. These vibrations can cause damage and/or bad functioning of the injector, and further generate a rather audible noise which is frequently irritating for the users of the vehicle on which the engine is mounted.

To obviate this drawback, an elastomer ring is used in the known art, which is mounted on the obturator element or on the endrun element, such as to be interposed between the metal surfaces thereof every time the obturator element reaches the open position, thus absorbing a majority of the vibrations and reducing the noise.

As with all annular bodies, the elastomer ring is generically conformed as a solid of revolution obtained by rotating a transversal section, called the generatrix, about an axis of symmetry belonging to the same plane as the transversal generating section, but distanced therefrom.

In the example, the elastomer ring is traditionally an O-ring, having a transversal generating section that is simply circular.

Because of this shape of the transversal section, the contact between the metal surfaces of the obturator element and the endrun element with the elastomer ring involves only a very small surface thereof, theoretically only a circumference, which is thus subjected to an extremely high pressure.

This pressure leads to rapid wear of the elastomer ring, especially at the contact circumference, which thus rapidly assumes a crushed shape that not only worsens its ability to absorb vibrations and noise, but especially modifies the run of the obturator element of the injector, altering, over time, its performance and consequently causing malfunctions in the batching of the combustible gas into the cylinders of the vehicle engine.

An aim of the present invention is thus to resolve the above-described drawbacks, in the ambit of a simple, rational and relatively inexpensive solution.

The aims are attained by the characteristics of the invention as reported in the independent claim 1. The dependent claims delineate preferred and/or particularly advantageous aspects of the invention.

In particular, the invention discloses a fuel injector for internal combustion engines, which generically comprises an external casing provided with at least an inlet and at least an outlet for the fuel to be injected, an obturator element, means for moving the obturator element between a closed position, in which it closes the communication between the inlet and the outlet, and an open position, in which it opens the communication between the inlet and the outlet, a fixed endrun element destined to come into contact with the obturator element in order to halt it in the open position and an elastomer ring interposed between the obturator element and the endrun element such as to attenuate the impacts between them.

As with all annular bodies, the elastomer ring of the present invention is generically conformed as a solid of revolution ideally obtained by rotating a transversal section, called the generatrix, about an axis of symmetry belonging to the same plane of the transversal generating section, but distanced therefrom.

In the present invention, the transversal generating section of the elastomer ring comprises at least a portion having an inclined development with respect to the central axis of the elastomer ring itself.

The inclined portion of the transversal generating section defines an annular lip of the elastomer ring which exhibits a generally tapered (or countersunk) shape with respect to the central axis.

In this way, when the elastomer ring is crushed between the metal surfaces of the obturator element and the endrun element, the tapered annular lip reacts elastically with a flexion, or a combination of compression and flexion, which progressively increases the surface of contact between the elastomer ring and the metal surfaces, thus better distributing the pressure and therefore improving the capacity to absorb the vibrations and the noise and reducing wear, such as to maintain the run of the obturator element more or less the same over time.

In an aspect of the invention, the transversal generating section of the elastomer ring comprises two portions having an inclined development with respect to the central axis, which portions have reciprocally opposite inclinations, such as to give the transversal generating section a substantial V-shape.

These two inclined portions define two annular lips of the elastomer ring, which are both tapered (or countersunk) with respect to the central axis of the elastomer ring and are positioned one after another along the direction of the central axis.

In this way, when the elastomer ring is crushed between the metal surfaces of the obturator element and the endrun element, both the tapered annular lips react elastically with a flexion or a combination of compression and flexion, thus further improving absorbance of the vibrations and noise, and further reducing wear.

In a further aspect of the invention, the inclined portions of the transversal generating section converge reciprocally towards the central axis of the elastomer ring.

In practice, the concavity of the V-shaped transversal generating section is at the greater diameter of the elastomer ring, and faces towards the outside with respect to the central axis.

This solution has the advantage of simplifying the realisation and the mounting of the elastomer ring.

However, alternatively, the inclined portions of the transversal generating section can converge reciprocally in a distancing direction from the central axis of the elastomer ring, i.e. the concavity of the V-shaped transversal generating section is at the smaller diameter of the elastomer ring, facing towards the central axis.

In a further aspect of the invention, the elastomer ring is solidly mounted to the obturator element.

In this way, the elastomer ring can generally be more simply mounted. However this does not exclude that alternatively the elastomer ring can be mounted solidly with the endrun element.

In an embodiment of the invention the elastomer ring is coaxially received internally of an annular cavity from which it at least partially projects.

In this way, the elastomer ring is stably constrained, as it cannot laterally exit from the annular cavity, notwithstanding the stresses to which it is subjected during the functioning of the injector.

In this regard, in an aspect of the invention the elastomer ring is housed in the annular cavity with mechanical interference.

In this way, the elastomer ring is stably constrained without the aid of any other fastening means.

However, during the development of the present invention and according to the coupling geometries between the elastomer element and the metal part, alternatively to the mechanical blocking a fastening by chemical anchoring could also be made (gluing) or by rubber-metal vulcanisation.

Further characteristics and advantages of the invention will emerge from a reading of the following description, provided by way of non-limiting example, with the aid of the figures illustrated in the accompanying drawings.
Figure 1 is a perspective view of an injector for methane gas or LPG.
Figure 2 is a frontal view of the injector of figure 1.
Figure 3 is section III-III of figure 2.
Figure 4 is detail IV of figure 3, in enlarged scale.
Figure 5 is a plan view of an elastomer ring of the present invention, in enlarged scale.
Figure 6 is section VI-VI of figure 5.

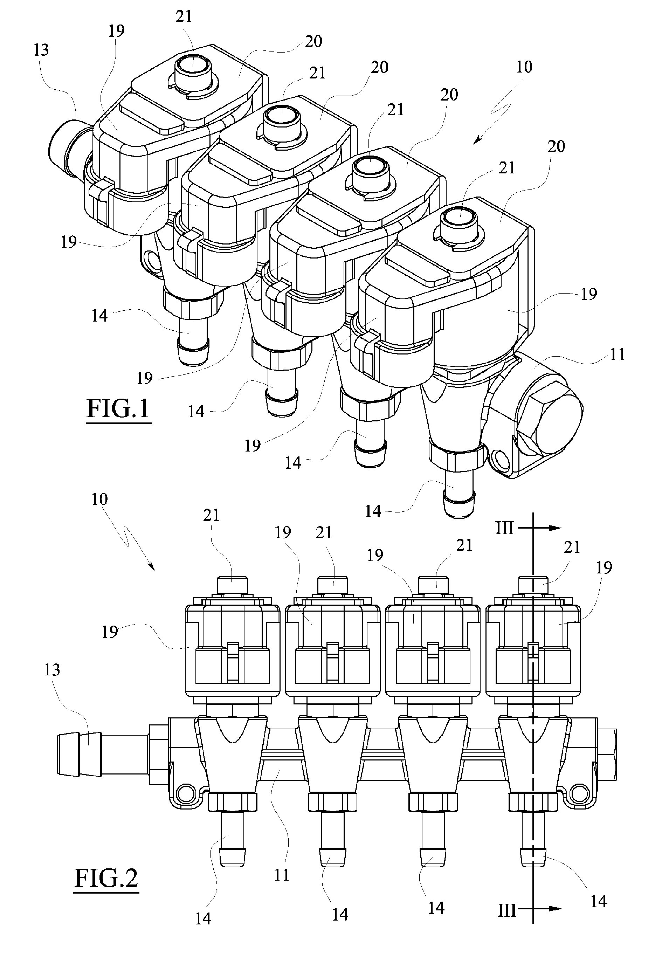

Figures 1 and 2 illustrate an injector 10 for combustible gas, typically for methane gas or Liquefied Petroleum Gas (LPG), which is destined to be used in a supply plant (not illustrated) of combustible gas in an alternative internal combustion engine of a motor vehicle.

The supply plant of the combustible gas generally comprises a pressurised tank in which the combustible gas is kept at pressure, a supply conduit suitable for connecting the pressurised tank with the injector 10, and a pressure reducer/stabiliser valve positioned along the supply conduit, for bringing combustible gas to, and maintaining it at, the operating pressure before it reaches the injector 10.

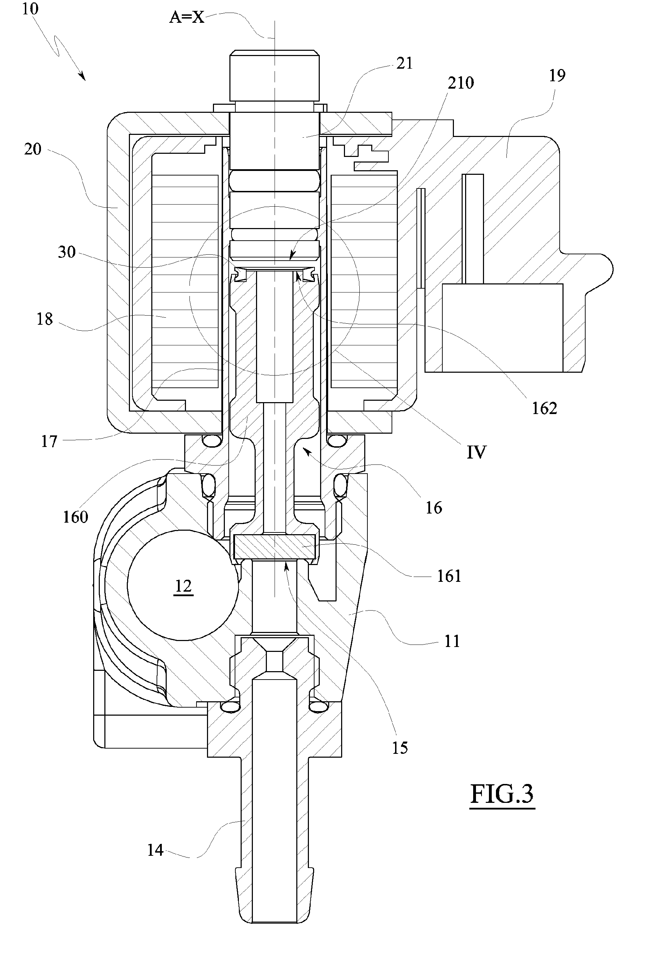

The injector 10 comprises an external casing 11 delimiting an internal volume 12 for collecting/distributing the combustible gas (see figure 3), which is in communication with an inlet 13 and a plurality of outlets 14.

The inlet 13 of the combustible gas is destined to be connected with the supply conduit, downstream of the pressure reducer valve.

The outlets 14 of the combustible gas are generally equal in number to the cylinders of the internal combustion engine. In the example, the injector 10 is destined for a four-cylinder engine and is provided therefore with four outlets 14.

Each outlet 14 is connectable, via a respective connecting conduit (not illustrated), with a channel of the aspiration manifold which guides the comburent air internally of a respective cylinder.

As illustrated in figure 3, each outlet 14 is in communication with the internal volume 12 via a respective opening 15, which is normally closed by an obturator element, denoted in its entirety by 16, which prevents the combustible gas from exiting from the injector 10.

The obturator element 16 comprises a body made of ferromagnetic material 160, substantially conformed as a small piston, and a closing plate 161 fixed to an end of the piston 160, which is destined to rest on the edge of the opening 15 and hermetically close it.

The piston 160 exhibits a longitudinal axis A and is housed in a cylindrical jacket 17, which is screwed to the external casing 11 with an interposing of a gasket or seal ring. Internally of the cylindrical jacket 17, the piston 160 is guided to slide forwards and backwards along the direction of the longitudinal axis A thereof.

A solenoid 18 is coaxially inserted on the cylindrical jacket 17, i.e. a coil exhibiting many windings of electrical wire, which solenoid 18 envelops the portion of the piston made of ferromagnetic material 160 which is on the opposite side with respect to the closing plate 161.

The solenoid 18 is housed in a respective insulating casing 19 made of plastic, which is in turn fixed to the injector 10 by means of a metal support bracket 20, which is coupled to the cylindrical jacket 17 with interposing of a seal ring.

The electrical contacts with which the windings of the solenoid 18 are connected to a source of electric power are also incorporated in the insulating casing 9; the power source is typically a battery of the vehicle on which the internal combustion engine is mounted, via a control board, which is destined to control the electric supply of the solenoid 18 on the basis of a suitable strategy that is without the ambit of the present description.

When the solenoid 18 is electrically supplied, the electric current flowing through the windings of the electric wire generates a magnetic field which moves the ferromagnetic piston 160, causing it to slide internally of the cylindrical jacket 17 in the direction of the longitudinal axis A thereof.

In particular, the piston 160 slides between the closed position of figure 3, in which the closing plate 161 is rested on the edge of the opening 15, closing the relative output 14, towards an open position (not illustrated), in which the closing plate 161 is distanced from the edge of the opening 15, leaving the relative output 14 open.

In practice, the piston 160 and the solenoid 18 define a usual electromagnet, with the piston 160 functioning as a mobile metal nucleus.

The piston 160 is halted in an open position by an endrun element 21, made of a metal material and having a substantially cylindrical shape, which is inserted into the cylindrical jacket 17 with interposing of suitable seal rings, and is solidly constrained to the support bracket 20, such as to stay still with respect to the piston 160.

In particular, the halting function is performed by a flat abutting surface 210 provided at the end of the endrun element 21, which faces the end surface 162 of the piston 160 which is at the opposite side with respect to the closing plate 161.

An elastomer ring 30 is interposed between the fixed endrun element 21 and the mobile piston 160, having a central axis X coinciding with the longitudinal axis A of the piston 160, the function of which is to prevent the respective end metal surfaces 210 and 162 from coming into reciprocal contact, causing a damaging and noisy percussion.

In the illustrated example, the elastomer ring 30 is fixed to the piston 160, but could alternatively be fixed to the endrun element 21.

The elastomer ring 30 is preferable made of elastomer mixtures (rubbers) suitable for contact with hydro-carbons, such as for example FKM, HNBR, NBR, Fluorosilicone, or plastic materials such as polyurethane, PTFE, PA, PBT.

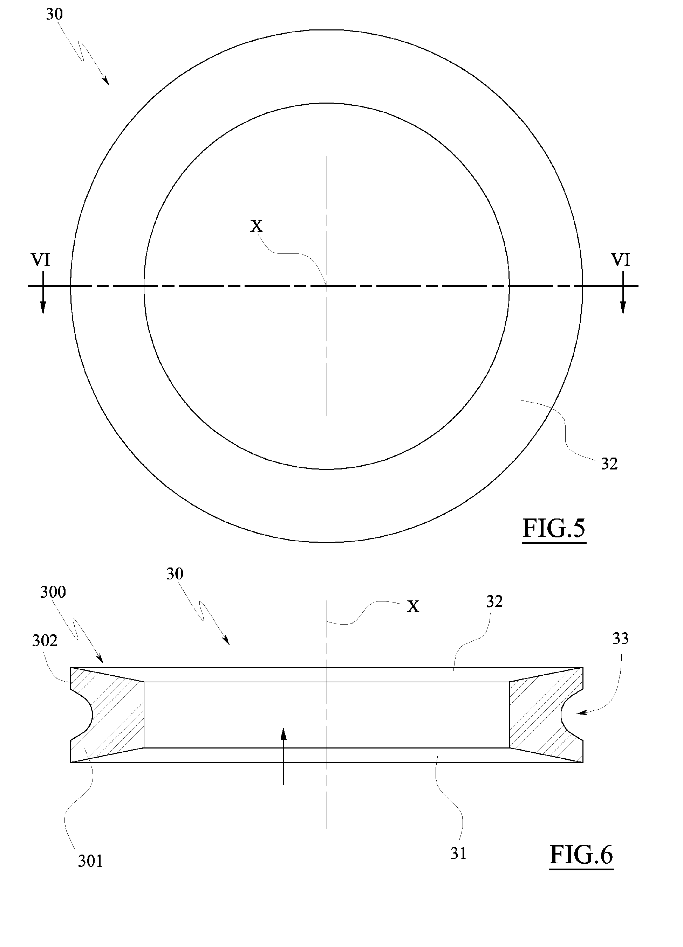

As illustrated in figures 5 and 6, the elastomer ring 30 is conformed as a solid of revolution, which is ideally obtained by rotating a transversal generating section 300 about an axis of symmetry belonging to the same plane as the transversal generating section 300 but distanced therefrom, which defines the central axis X of the elastomer ring 30. In other words, the transversal generating section 300 of the elastomer ring 30 is any section of the profile of the ring performed with respect to a plane having a section containing the central axis X.

In the present invention, the transversal generating section 300 of the elastomer ring 30 comprises two portions both having an inclined development with respect to the central axis X. In particular, with respect to a hypothetical direction from below upwards defined by the arrow indicated in figure 6, the transversal generating section 300 comprises a first inclined portion 301 which develops from down in an upwards direction nearingly to the central axis X, and a second inclined portion 302 which develops from down in an upwards direction distancingly from the central axis X. The first inclined portion 301 and the second inclined portion 302 have opposite inclinations to one another, such as to converge with respect to one another nearingly to the central axis X, and thus give to the transversal generating section 300 an overall shape which is like a V having the concavity thereof facing the opposite way with respect to the central axis X.

In the example illustrated herein, the transversal generating section 300 more precisely takes on the shape of an isosceles trapeze, having a smaller base facing towards the central axis X and the larger base facing externally and centrally grooved by a recess which extends towards the smaller base. Alternatively, the first inclined portion 301 and the second inclined portion 302 can converge with respect to one another distancingly from the central axis X, and thus give the transversal generating section 300 an overall shape which is like a V having the concavity thereof facing towards the central axis X.

More precisely, the transversal generating section 300 could still take on the form of an isosceles triangle, but having the smaller base facing externally and the larger base facing the central axis X and being centrally grooved by a recess which extends towards the smaller base.

In any case, each of the inclined portions 301 and 302 of the generating transversal section 300 defines an annular lip of the elastomer ring 30, denoted respective by 31 and 32, which exhibits a tapered shape (countersunk) with respect to the central axis X.

In particular, each annular lip 31 and 32 exhibits an opposite tapering with respect to that of the other annular lip, such that the free projecting edges of the annular lips 31, and 32, in the undeformed configuration, are separated from one another by an empty annular space 33.

In this way, when the elastomer ring 30 is crushed between the metal surfaces 162 and 210 of the piston 160 and the endrun element 21, both the tapered annular lips 31 and 32 react elastically with a flexion or with a combination of compression and flexion, nearing one another in the direction of the central axis X and thus occupying the empty annular space 33. Thanks to this flexion and/or compression, the contact surface between the elastomer ring 30 and the metal surfaces 162 and 210 progressively increases during the crushing, better distributing the pressure and thus improving the ability of the elastomer ring 30 to absorb the vibrations and the noise, also reducing wear.

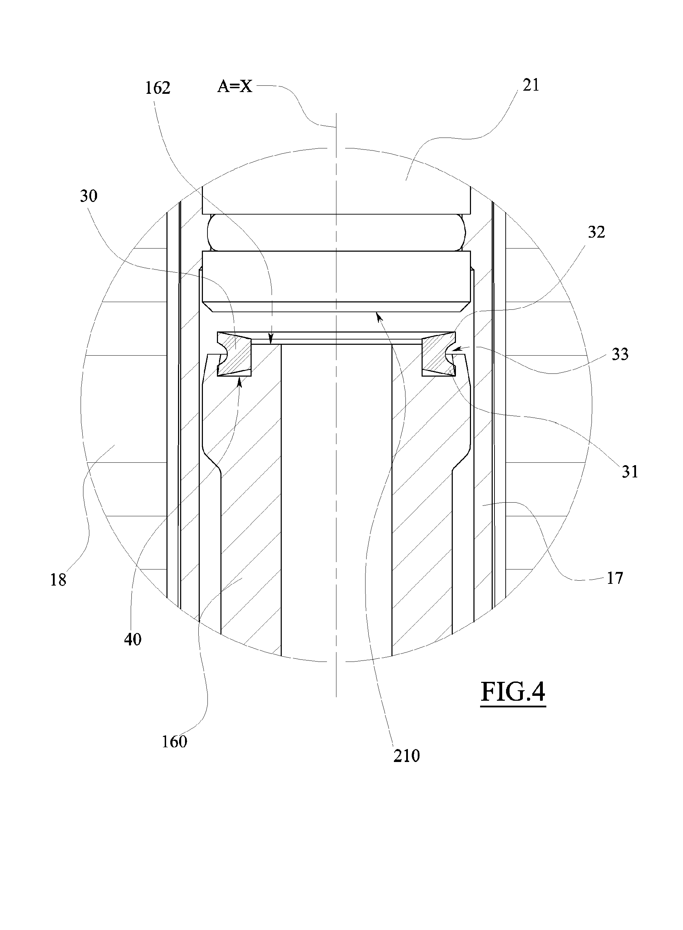

From the constructional point of view (see figure 4) the elastomer ring 30 is coaxially accommodated in an annular cavity 40, which is fashioned on the end surface 162 of the piston 160, with the central axis thereof coinciding with the longitudinal axis A. In the axial direction, the annular cavity 40 has a lesser depth with respect to the height of the elastomer ring 30, such that the ring can project from the cavity 40 in order to interpose effectively between the end surface 162 of the piston 160 and the end surface 210 of the endrun element 21. In the radial direction, the annular cavity has dimensions such as to accommodate the elastomer ring 30 with a certain degree of interference, such that it is stably constrained to the piston 160, without any need for further fixing means. This constraint is made more stable by the fact that the external diameter surface of the annular cavity 40 is slightly undercutting with respect to the end surface 162 of the piston 160. The elastomer ring 30 might be fixed to the piston 160 in other ways too; for example it might be glued or vulcanised couplingly with the metal.

As mentioned herein above, the annular cavity 40 might also be realised in the abutting surface 210 of the endrun element 21, and thus the elastomer ring 30 might be associated thereto instead of to the piston 160 as described herein above.

Obviously a technician expert in the field might bring numerous modifications of a technical-applicational nature to the injector 10 without its forsaking the ambit of the invention as claimed herein below.

## Claims

1. A fuel injector (10) for internal combustion engines, comprising an external casing (11) provided with at least an inlet (13) and at least an outlet (14) for the fuel to be injected, an obturator element (16), means (18) for moving the obturator element (16) between a closed position, in which it closes the communication between the inlet (13) and the outlet (14), and an open position, in which it opens the communication between the inlet (13) and the outlet (14), a fixed endrun element (21) suitable for coming into contact with the obturator element (16) in order to halt said obturator (16) in the open position and an elastomer ring (30) interposed between the obturator element (16) and the endrun element (21), **characterised in that** the elastomer ring (30) exhibits a transversal generating section (300) comprising at least a portion (301) having an inclined development with respect to a central axis (X) of the elastomer ring (30).

2. The injector (10) of claim 1, **characterised in that** the transversal generating section (300) comprises two portions (301, 302) having an inclined development with respect to the central axis (X), which two portions (301, 302) have reciprocally opposite inclinations.

3. The injector (10) of claim 2, **characterised in that** the inclined portions (301, 302) of the transversal generating section (300) reciprocally converge towards the central axis (X).

4. The injector (10) of claim 2, **characterised in that** the inclined portions (301, 302) of the transversal generating section (300) reciprocally converge distancingly from the central axis (X).

5. The injector (10) of any one of the preceding claims, **characterised in that** the elastomer ring (30) is mounted solidly to the obturator element (16).

6. The injector (10) of any one of claims from 1 to 4, **characterised in that** the elastomer ring (30) is mounted solidly to the endrun element (21).

7. The injector (10) of any one of the preceding claims, **characterised in that** the elastomer ring (30) is coaxially accommodated internally of an annular cavity (40) from which it at least partially projects.

8. The injector of claim 7, **characterised in that** the elastomer ring (30) is accommodated in the annular cavity (40) with mechanical interference.

9. The injector of any one of the preceding claims, **characterised in that** the elastomer ring (30) is glued or vulcanised couplingly with the element (16, 21) to which it is associated.
